# EUROPEAN PATENT SPECIFICATION

(11) **EP 2 631 095 B1**
(45) Date of publication and mention of the grant of the patent: **17.12.2014**
(21) Application number: 13000884.0
(22) Date of filing: 22.02.2013
(51) Int. Cl.: B60G 17/017, B60T 8/18

(54) **Electronic level control**
Elektronikpegelsteuerung
Commande de niveau électronique

(30) Priority: 24.02.2012 GB 201203276
(43) Date of publication of application: 28.08.2013
(73) Proprietor: KNORR-BREMSE Systeme für Nutzfahrzeuge GmbH, 80809 München (DE)
(72) Inventor: Fry, Matthew, 80809 München (DE); Fricska, Karoly, 80809 München (DE); Fazakas, Gergely, 80809 München (DE); Hiller, Kristof, 80809 München (DE)
(74) Representative: JENSEN & SON

(56) References cited:
- EP-A1- 1 800 916
- DE-A1-102007 002 020
- DE-A1-102008 062 636
- GB-A- 2 467 978

## Description

The invention relates to an electronic level control system for a trailer.

Modern trailer systems are predominately air suspended, with a trailing arm connection to the chassis. The body height is maintained either by a mechanical leveling valve or by means of an electronic level control system comprising a potentiometer, an electrically controlled valve for increasing or decreasing the pressure in the air bellows and an electronic control unit. These trailers often have a device for raising and lowering the suspension to facilitate loading and unloading. This is either a pressure increase/decrease valve controlled by a handle for a conventional system or an electronic means of adjusting the target level of the electronic control unit. An example of such an electronic means is Knorr-Bremse's Trailer Information Module (TIM)™.

Tractor units can apply large brake pressures to the trailer when parking, in particular if the independent trailer operated park brake is not applied. Due to the trailing arm connection to the chassis, changing the air pressure in the suspension causes a small rotational moment on the wheel end. A known problem of such combinations is that with the tractor park brake applied the trailer body is not able to either be raised or lowered as the suspension system is unable to generate enough force to overcome the friction between the tyre and ground. As the operator will continue to try to put more air into the suspension system or exhaust air out until the body moves often the air bellows are consequently over filled or completely emptied.

Damage or injury can then occur if the truck park brake is released as the brake force holding the wheels in place is quickly removed allowing the wheels to rotate and the suspension to move, resulting in the trailer body either falling down on the bump stops or jumping up until a restraining device such as a chain stops the movement. In both cases large forces are exerted leading to damage on the suspension system, axles and cargo.

This problem can also manifest itself when the automatic leveling system is engaged and the trailer is being either loaded or unloaded, as the automatic leveling system is unable to adjust the air volume in the air bellows as the lever does not move due to the trailer body being locked in place by the suspension system as again it is unable to generate enough force to overcome the friction between the tyre and ground.

Again damage and injury can occur when the truck park brake is released as the brake force holding the wheels is place is quickly removed allowing the wheels to rotate and the suspension to move resulting in the trailer body either falling down on the bump stops or jumping up until a restraining device such as a chain stops the movement, the leveling system is unable to react quickly enough to composite for the rapid change.

Known trailer EBS systems provide a manual control for the raise lower function. This manual control releases the brakes through twelve cycles with the brakes being released alternately on the left and right hand side for a semi trailer and alternately the front and rear brakes for a full trailer. By releasing the brakes in these short bursts, the wheels can rotate slightly which enables the trailer body to move to the new position and also enables the leveling system to compensate for any load changes.

The known system suffers from the inherent problem that it requires manual actuation and many operators forget to use the system. The release of the brakes is also independent of the trailer height adjustment and so the problems associated with sudden changes of trailer height outlined above can still occur.

EP 1800916 discloses a levelling control system in which when the levelling control unit on the trailer is actuated, a control signal is sent by the levelling control unit to release and then re-apply the brakes on alternate sides of the trailer.

The present invention seeks to provide an electronic level control system for a trailer that overcomes these problems.

According to a first aspect the invention there is provided an electronic level control system for a trailer comprising an electronic level control adapted to control air flow in an air suspension on a trailer, wherein the electronic level control is adapted to request a change in brake pressure applied to wheels of the trailer in dependence on the status of a park brake on a tractor with a pneumatic connection to the trailer.

According to a second aspect of the invention there is provided a level control system for a trailer with an electronic braking system, the level control system comprising a sensor to detect changes in the level or height of the trailer, wherein the electronic braking system is adapted to determine pressure in airbags usable to control the height or level of the trailer, such that in the event that the electronic braking system detects a predetermined pressure change in the airbags in response to a request to change the trailer level or height, the brake pressure on at least the wheel where the pressure change is detected is reduced or released.

According to a third aspect of the invention, there is provided a method of compensating level changes in a trailer due to changes in load on the trailer, which trailer is provided with an electronic braking system, wherein the braking system is adapted to monitor changes in the supply pressure to the trailer from a tractor pneumatically connected to the trailer, the trailer further being provided with a level or height sensor, the output of which is fed to at least one of a level control or the brake control system, wherein, when the trailer brakes are applied and the trailer is substantially stationary, in the event that a change in the supply pressure indicative of a release of a parking brake is detected by the brake control unit, the brake control unit is adapted to release the brakes for a predetermined period of time and then to reapply the brakes and in the event that the output of the level or height sensor indicates a change in level or height exceeding a predetermined threshold, a control routine is triggered in the level control to restore the trailer height or level to a predetermined setting.

Preferably, the changes in height or air volume in the airbags is signalled to the brake control unit, which then further releases the brake pressure for a predetermined period of time to enable the trailer height or level to be changed. Preferably, once the trailer is at the desired height, the trailer brakes are released. Alternatively, the electronic brake system is provided with a load pressure sensor, the output of which changes in dependence on load, wherein the brakes are released for a predetermined period of time if the output of the load pressure sensor changes.

The TELC electronic control unit is preferably part of the Trailer EBS system but may also be a separate unit.

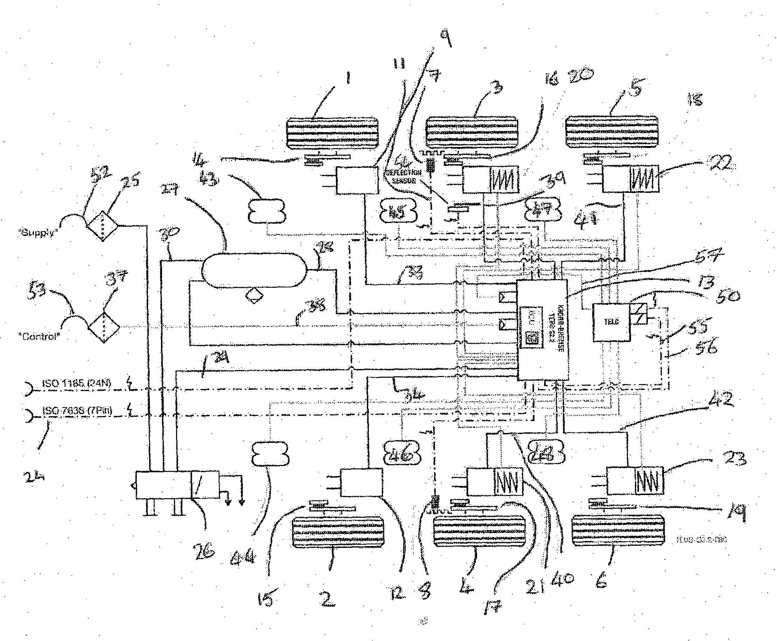

Exemplary embodiments of the invention will now be described in greater detail with reference to the drawing, in which
Fig. 1 shows schematically a trailer braking system with electronic level control. The vehicle trailer has three axles with the first axle having wheels 1,2, the second axle having wheels 3,4 and the third axle wheels 5,6. Rotational wheel speed sensors 7,8 are in each case assigned to the wheels on the second axle and are connected by way of electric lines 9,10 with an electropneumatic brake pressure control module 13 (EBS module) which is primarily assigned to the rear axle brakes. One brake 14-19 is in each case assigned to the wheels 1, 2, 3, 4, 5, 6 which brake 14-19 can be applied by means of brake cylinders 11, 12 of the first axle or spring-loaded brake cylinders 20, 21, 22, 23 of the second and third axles.

The braking system of the trailer vehicle can be connected by way of three connections, specifically a pneumatic supply line connection 52, a pneumatic control line connection 53 and a 7 pin ISO 7638 electric control connection 24, with the braking system of a tractor or a further trailer. The electric control line 24 provides the ISO 11992 CAN data connection via the 6^{th} and 7^{th} pins.

The supply line connection 52 is connected by way of a filter valve 25 and a parking valve 26 with an air brake reservoir 27 via a pneumatic line 30. From the air brake reservoir 27, a pneumatic line 28, 29 leads to supply inputs of the pressure control module 13.

The pressure control module 13 is assigned jointly to both brake cylinders 11, 12 of the first axle and is connected with the brake cylinder 11 by way of a pneumatic line 33 and with the brake cylinder 12 by way of a pneumatic line 34. The pressure control module 13 has an integrated pressure sensor, which measures the pressure in the pneumatic control line 38.

The pressure control module 13 has pneumatic outputs 39-42 which are connected by way of assigned pneumatic lines with the spring brake cylinders 20-33.

Air bags 43-48 are provided at each wheel 1-6. These permit a determination of the axle load, particularly of the dynamic axle load during braking and starting. The air bags are connected by way of pneumatic lines with an electronic level control unit 50. A deflection sensor 54 is provided on one wheel that can provide an independent measurement of trailer height and the output of this sensor is fed to the EBS ECU 13.

The trailer electronic level control 50 is provided with electrical power via a line 55 and can communicate data via line 56. Pressure to the electronic level control 50 is controlled by means of a pneumatic connection 57 to the EBS ECU 13.

By monitoring the drivers demand level via the yellow line using the EBS on board pressure sensor, and if available the electronic drivers demand value coming via the ISO11992 on pins 6 and 7 of line 24, and the on board wheel speed information it is possible to determine that the driver has applied the parking brake of the truck. More modem tractor units can also supply the parking brake status over the ISO11992 making the decision calculation trivial.

When the tractor park brake is applied and the electronic level control 50 receives a request to change the body height from a device such as the TIM or from the operator via a remote control unit fitted in the truck sending data over the ISO11922, the electronic level control 50 will start to increase or decrease the air volume in the air bags 43-48. By monitoring the reaction on the level or height sensor 54 the electronic level control 50 can recognise that the expected suspension reaction is not achieved. The electronic level control 50 then can trigger short periods of brake release by the EBS ECU 13 to allow the wheels to move and the suspension to move. Once triggered the TELC can continue increase or decrease the air volume in the air bags allowing the body to reach the required height. Furthermore, the load pressure sensor provided in the Trailer EBS can be used instead of or in conjunction with the level or height sensors, by monitoring the said pressure sensor during increasing or decreasing the air volume in the air bags it is possible to recognise the measured pressure is increasing or decreasing - this would not occur if the body height is free to change as only the volume of air changes. Again the short brake releases can be triggered to allow the body to reach the required height.

The triggering of the braking release could alternatively be done with a conventional system if a level or height sensor connected the to the EBS ECU 13.

To protect against undetected load changes the EBS system can detect that the park brake is released by monitoring for a rapid change of the yellow line pressure in line 52 (or alternatively use ISO11992 data if available). If it is detected that the park brake is released, the EBS ECU 13 triggers a short release of the trailer brakes and then reapplies them.

If the electronic level control sees a change in the level or height sensor 54 then the load has been changed and its normal control loop will start to adjust the air volume to maintain the height. This is then signalled to the EBS ECU 13 which will do further short releases of the trailer brakes until the required height is reached, at which point the trailer brakes can be released. It would not necessarily be required to adjust the air volume to an exact amount before releasing the brakes completely, as by allowing a small adjustment damage can be avoided. Furthermore, the load pressure sensor provided in the Trailer EBS can be used instead of, or in conjunction with the level or height sensors, by monitoring the said pressure sensor during brake release it is possible to recognize that the pressure the measured pressure is increasing or decreasing - this would not occur if the body height was at the correct height.

The short burst of brake release could be replaced a brake ramp allowing the body height to change slowly and the air volume to be compensated.

## Claims

1. An electronic level control system for a trailer comprising an electronic level control adapted to control air flow in an air suspension on a trailer, chacterised in that the electronic level control (50) is adapted to request a change in brake pressure applied to wheels of the trailer in dependence on a status of a park brake on a tractor with a pneumatic connection to the trailer, which status is detected or determined by at least one of the electronic level control (50) or electronic brake control (13).

2. An electronic level control system according to Claim 1, wherein the brake pressure is temporarily released.

3. An electronic level control system according to Claim 1, wherein the brake pressure is reduced in accordance with a predefined characteristic.

4. An electronic level control system according to Claim 1, wherein the brake pressure is released and reapplied a plurality of times.

5. An electronic level control system according to any one of Claims 1 to 4, wherein at least one of the electronic level control (50) and braking system ECU (13) receives a signal indicative of the supply pressure from the tractor to the trailer braking system and signals from a wheel speed sensor (14-19) on the trailer, said signals being used to determine whether the tractor park brakes are applied.

6. An electronic level control system according to any one of Claims 1 to 5, wherein at least one of the electronic level control (50) and braking system ECU (13) receives a electronic drivers demand value signal from the tractor, said signal being used to determine whether the tractor park brakes are applied.

## Patentansprüche

1. Elektronikpegelsteuerung für einen Anhänger, umfassend eine Elektronikpegelsteuerung, die auf die Steuerung eines Luftstroms in der Luftfederung eines Anhängers ausgelegt ist, **dadurch gekennzeichnet, dass** die Elektronikpegelsteuerung (50) so ausgelegt ist, dass sie abhängig vom Zustand einer Parkbremse einer Zugmaschine mit einer pneumatischen Verbindung zum Anhänger eine Änderung des auf die Räder des Anhängers ausgeübten Bremsdrucks anfordert, wobei der Zustand entweder von der Elektronikpegelsteuerung (50) oder von der elektronischen Bremssteuerung (13) oder von beiden erkannt oder bestimmt wird.

2. Elektronikpegelsteuerung nach Anspruch 1, wobei der Bremsdruck zeitweilig entlastet wird.

3. Elektronikpegelsteuerung nach Anspruch 1, wobei der Bremsdruck entsprechend einem vorgegebenen Merkmal reduziert wird.

4. Elektronikpegelsteuerung nach Anspruch 1, wobei der Bremsdruck mehrere Male entlastet und wieder aufgebracht wird.

5. Elektronikpegelsteuerung nach einem der Ansprüche 1 bis 4, wobei entweder die Elektronikpegelsteuerung (50) oder die elektronische Steuerung des Bremssystems (13) oder beides ein Signal, das den Speisedruck von der Zugmaschine zum Bremssystem des Anhängers anzeigt, sowie Signale eines Raddrehzahlgebers (14-19) am Anhänger empfängt und diese Signale dazu verwendet werden zu bestimmen, ob die Parkbremsen der Zugmaschine betätigt sind.

6. Elektronikpegelsteuerung nach einem der Ansprüche 1 bis 5, wobei entweder die Elektronikpegelsteuerung (50) oder die elektronische Steuerung des Bremssystems (13) oder beides ein Sollwertsignal eines elektronischen Treibers von der Zugmaschine empfängt und diese Signale dazu verwendet werden zu bestimmen, ob die Parkbremsen der Zugmaschine betätigt sind.

## Revendications

1. Système de commande de niveau électronique pour une remorque comprenant un organe de commande de niveau électronique conçu pour commander le débit d'air dans une suspension pneumatique sur une remorque, **caractérisé en ce que** l'organe de commande (50) de niveau électronique est conçu pour demander une modification de pression de freinage appliquée aux roues de la remorque en fonction d'un état d'un frein de stationnement sur le tracteur doté d'un raccordement pneumatique avec la remorque, ledit état étant détecté ou déterminé par l'au moins un organe de commande (50) de niveau électronique ou organe de commande (13) de frein électronique.

2. Système de commande de niveau électronique selon la revendication 1, la pression de freinage étant provisoirement libérée.

3. Système de commande de niveau électronique selon la revendication 1, la pression de freinage étant réduite en fonction d'une caractéristique prédéfinie.

4. Système de commande de niveau électronique selon la revendication 1, la pression de freinage étant libérée et réappliquée plusieurs fois.

5. Système de commande de niveau électronique selon l'une quelconque des revendications 1 à 4, l'au moins un parmi l'organe de commande (50) de niveau électronique et l'unité de contrôle électronique (13) de système de freinage reçoit un signal indiquant la pression d'alimentation provenant du tracteur appliquée au système de freinage de la remorque et des signaux provenant d'un capteur (14, 19) de vitesse de roue sur la remorque, lesdits signaux étant destinés à être utilisés pour déterminer si les freins de stationnement de tracteur ont été appliqués.

6. Système de commande de niveau électronique selon l'une quelconque des revendications 1 à 5, l'au moins un parmi l'organe de commande (50) de niveau électronique et l'unité de contrôle électronique (13) de système de freinage reçoit un signal électronique de valeur de demande de conducteurs provenant du tracteur, ledit signal étant destiné à être utilisé pour déterminer si les freins de stationnement de tracteur ont été appliqués.
